# EUROPEAN PATENT SPECIFICATION

(11) **EP 2 949 768 B1**
(45) Date of publication and mention of the grant of the patent: **17.07.2019**
(21) Application number: 15165210.4
(22) Date of filing: 27.04.2015
(51) Int. Cl.: C22C 1/04, C22C 19/05, B33Y 70/00, B22F 3/105

(54) **GAMMA PRIME PRECIPITATION STRENGTHENED NICKEL-BASE SUPERALLOY FOR USE IN POWDER BASED ADDITIVE MANUFACTURING PROCESS**
AUSSCHEIDUNGSGEHÄRTETEN GAMMA-PRIME-SUPERLEGIERUNG AUF NICKELBASIS ZUR VERWENDUNG IN VERFAHREN ZUR HERSTELLUNG PULVERBASIERTER ADDITIVE
PRÉCIPITATION GAMMA PRIME RENFORCÉE PAR UN SUPERALLIAGE À BASE DE NICKEL DESTINÉE À ÊTRE UTILISÉE DANS UN PROCESSUS DE FABRICATION D'ADDITIF À BASE DE POUDRE

(30) Priority: 28.05.2014 EP 14170319
(43) Date of publication of application: 02.12.2015
(73) Proprietor: Ansaldo Energia IP UK Limited, London W1G 9DQ (GB)
(72) Inventor: Etter, Thomas, 5037 Muhen (CH); Meidani, Hossein, 5420 Ehrendingen (CH); Konter, Maxim, 5313 Klingnau (CH)
(74) Representative: Bernotti, Andrea

(56) References cited:
- EP-A1- 1 359 231
- EP-A1- 2 589 449
- US-A1- 2011 150 693

## Description

### BACKGROUND OF THE INVENTION

The present invention relates to the technology of producing three-dimensional articles by means of powder-based additive manufacturing, such as selective laser melting (SLM) or electron beam melting (EBM). Especially, it refers to a high oxidation resistant and high gamma-prime (γ') precipitation containing Ni-base superalloy powder for manufacturing of nearly crack free components. Said superalloy powder consists of a chemical composition that allows establishing a gamma-prime precipitation content of 60-70 vol. -% in said superalloy in a heat treated condition.

### PRIOR ART

Gamma-prime (γ') precipitation-strengthened nickel-base superalloys with a combined fraction of Al and Ti of about more than 5 wt.-% are known to be very difficult to weld because of their micro-crack sensitiveness. Micro-cracking during welding of those superalloys, such as IN738LC, MARM-M 247, CM247LC, is attributed to the liquation of precipitates or low-melting eutectics in the heat affected zone (HAZ), ductility dip cracking (DDC) or strain-age cracking in subsequent heat treatment.

In the document: B. Geddes, H. Leon, X. Huang: Superalloys, Alloying and performance, ASM International, 2010, page 71-72, the authors describe a weldability line for superalloys approximately as [two times Al concentration (in wt.-%) + Ti concentration (in wt. %)] < 6.0, this means that Ni base superalloys with more than 6 wt.- % of [2 times Al (in wt. -%)+ Ti (in wt. -%)] are defined as difficult to weld materials. Solidification and grain boundary liquation cracking occurs during the welding process, whereas post-weld heat treatments often lead to strain age cracking in gamma-prime Ni₃(Al,Ti) precipitate strengthened alloys.

Therefore, mainly solid-solution strengthened (e.g. IN625) or gamma-prime strengthened nickel-base superalloys with a low amount of Al and Ti (e.g. IN718) are processed by SLM or EBM so far.

SLM-generated articles have different microstructures compared to conventionally cast material of the same alloy. This is primarily due to powder based layer-by-layer article production and the inherent high cooling rates due to the high energy beam-material interaction in these processes. Due to the extremely localized melting and the resulting very fast solidification during SLM, segregation of alloying elements and formation of precipitates is considerably reduced. This results in a decreased sensitivity for cracking compared to conventional build-up welding techniques. Therefore, SLM allows for the near-net shape processing of difficult to weld and difficult to machine materials such as high Al+Ti containing alloys (e.g. IN738LC/CM247LC).

By using commercially available IN738LC powder for the SLM process unfortunately microcracks are still present in the manufactured articles. This was for example confirmed in a presentation by Fraunhofer Institute for Laser Technology (J. Risse, C. Golebiewski, W. Meiners, K. Wissenbach: Influence of process management on crack formation in nickel-based alloy parts (IN738LC) manufactured by SLM, RapidTech, 14./15.05.2013, Erfurt). It was stated there that crack free articles can only be manufactured with an extensive preheating.

It has been found by the applicant that the hot cracking susceptibility of SLM processed IN738LC strongly differs between powder batches from different suppliers and cannot be predicted by classic weldability charts, but a tight control of specific minor/trace elements (Zr, Si) in a specific range in IN738LC powder is an important precondition for manufacturing of nearly crack-free components by SLM (see not yet published EP application 13199285.1) without an extensive preheating.

The fact that the high Al and Ti content is not the main reason for cracking in Ni based superalloys processed by additive manufacturing indicates that Ni-base alloys with even a higher amount of gamma prime than IN738LC/CM247LC, as typically found in single crystal (SX) alloys with a gamma-prime content of 60-70 vol.-% compared to the gamma-prime content of about 50 vol.-% in IN738LC, could be processed.

Unfortunately, using Ni based SX alloys with "standard" chemistry, as disclosed for example in EP 1 359 231 A1 or EP 0 914 484 B1 (i.e. low amount of grain boundary strenghtening elements such as C, B, Zr, Hf, which is the reason for the lack of grain boundaries in SX alloys) give not sufficient mechanical strength in components processed by additive manufacturing due to the fine-grained microstructure. At the same time adding grain boundary strengtheners in a proportion typical for cast alloys such as IN738LC, MarM247, CM247LC (C: 0.07-0.16 wt.%, B: 0.007-0.02 wt.%, Zr: 0.004-0.07 wt.%, Hf: up to 1.6 wt.%) results in even more pronounced cracking of the alloys during the additive manufacturing process.

Therefore, powder made of cast SX Ni based superalloys with a chemical composition according to the known state of the art is not suitable for additive manufacturing, for example SLM or EBM, of crack-free components.

Document US2011/150693 A1 discloses a Ni-base superalloy with a composition capable of providing hardening by double precipitation of gamma' and gamma " or delta phase. According to the specified chemical composition the gamma prima phase content of the described alloy is maximal about 10 to 15 vol.-%. The alloy is used for powder metallurgical processes, wherein the powder is densified and hot forged. The process parameters of the method described in US2011/150693A1 as well as the properties of the manufactured components are therefore complete different to powder based additive manufacturing processes, like SLM, EBM.

Document EP 2 589 449 discloses a nickel-based super alloy powder for additive manufacturing.

### SUMMARY OF THE INVENTION

It is an object of the present invention to provide a Nickel-base superalloy powder for additive manufacturing (preferable SLM, EBM) of three-dimensional articles with a reduced hot cracking tendency. Said superalloy powder consists of a chemical composition that allows establishing a gamma-prime precipitation content of 60-70 volumen -% (vol. -%) in the superalloy in a heat treated condition. It relates to a specially adjusted chemical composition of a (usually cast) SX Ni-based superalloy as well as to the powder morphology size..

This object is realized by a Nickel-base superalloy powder according to claim 1, namely a Nickel-base superalloy powder for additive manufacturing of three-dimensional articles, wherein said superalloy powder consists of a chemical composition that allows establishing a gamma-prime precipitation content of 60-70 vol.-% in the superalloy in a heat treated condition. It - is characterized in that said powder has a powder size distribution between 10 and 100 µm and a spherical morphology and that the ratios of the content (in wt. - %) of the alloying elements C, B, Hf, Zr, Si are the following:
C/B = 10 - 32;
C/Hf > 2;
C/Zr > 8;
C/Si > 1.

The gamma-prime content can be measured for example by digital image analysis, by chemical extraction of the gamma-prime phase or by X-ray diffraction. A preferred embodiment is a Nickel-base superalloy powder which comprises a ratio of C/B = 16 - 32 and that it is free of Hf, Zr, Si, and which could be processed by additive manufacturing with a very high quality.

Adding a sufficient amount of carbon to strengthen the grain boundaries and keeping other grain boundary strengthening elements at very low level allows the crack-free processing of Ni-base superalloys with such a high amount of gamma-prime by addive manufacturing

A Nickel-base superalloy powder according to the invention consists of the following chemical composition (in weight-%):
7.7-8.3 Cr
5.0-5.25 Co
2.0-2.1 Mo
7.8-8.3 W
5.8-6.1 Ta
4.7-5.1 Al
1.1-1.4 Ti
0.08-0.16 C
0.005-0.008 B
0-0.04 Hf
0-0.01 Zr
0-0.08 Si
remainder Ni and unavoidable impurities. Most preferred is such a powder with 0.13-0.15 wt. -% C, 0.005-0.008 wt. - % B and with no Hf, no Zr and no Si. Other preferred ranges of Al, Ti, Hf, Si, Zr are disclosed in several dependent claims.

### DETAILED DESCRIPTION OF DIFFERENT EMBODIMENTS OF THE INVENTION

Different embodiments of the invention are now described in detail.

In general, the high oxidation resistant Nickel-base superalloy powder that has a chemical composition that allows to reach a high gamma-prime precipitation content of 60-70 vol.-% in a heat treated condition according to the present application should be suitable for processing of (nearly) crack-free additive manufactured three-dimensional articles, for example gas turbine blades.

The disclosed Nickel-base superalloy has a chemical composition capable of providing hardening by gamma-prime precipitation wherein the content of gamma prime is very high, namely 60-70 vol. -%. It is known from the prior art that the gamma-prime content of for example a Nickel-base superalloy can be measured for example by digital image analysis, by chemical extraction of the gamma-prime phase or by X-ray diffraction.

The powder according to the present disclosure has a powder size distribution between 10 and 100 µm and a spherical morphology. This allows a good processing.

Main alloying elements of such Nickel-base superalloys are for example Cr, Co, Mo, W, Ta, Al, Ti. It was found out that the ratios of the content (in weight- %) of the alloying elements C, B, Hf, Zr, Si in such a powder should be follows
C/B = 10 - 32, preferable 16 - 32;
C/Hf > 2;
C/Zr > 8;
C/Si > 1.

By adding a sufficient amount of carbon, which strengthens the grain boundaries and by keeping other grain boundary strengthening elements at very low level (preferable the powder is free of Si, Hf, Zr) a crack-free processing of Ni-base superalloys with such a high amount of gamma-prime by additive manufacturing is realized.

A Nickel-base superalloy powder according to the invention consists of the following chemical composition (in weight-%):
7.7-8.3 Cr
5.0-5.25 Co
2.0-2.1 Mo
7.8-8.3 W
5.8-6.1 Ta
4.7-5.1 Al
1.1-1.4 Ti
0.08-0.16 C
0.005-0.008 B
0-0.04 Hf
0-0.01 Zr
0-0.08 Si
remainder Ni and unavoidable impurities. The above-mentioned composition is a specially adjusted chemical composition of the cast SX Ni-based superalloy described in EP 1 359 231 A1. There is a unique simultaneously increase in the C content and a reduction in the content of B, Zr,Hf which assures on one hand the required strenght of the processed component, on the other hand a crack-free processing of the powder during SLM/EBM processes. Preferable ranges for the C-, Si and Hf- contents are 0.09-0.16 wt.-% C, most preferable 0.13-0.15 wt.-% C, 0-0.03 wt.-% Si and 0-0.01 wt.-% Hf. Good results could be reached with small additions of Hf in the range of 0.005-0.01 wt.-%, of Zr in the range of 0.005-0.01 wt.-% and Si in the range of 0.005- 0.03 wt.-%.

A widening of the range of the Al-content (4.7-5.1 wt.-% instead fo 4.9-5.1 wt.-% according to EP 1 359 231 A1) and of the Ti-content (1.1-1.4 wt.-% instead of 1.3-1.4 wt.-% according to EP 1 359 231 A1) allows a tuning of the gamma-prime content in the superalloy after additive manufacturing process.

Best results during the additive manufacturing of a gas turbine blade can be achieved with a sperical Ni-based superalloy powder with a powder size distribution between 10 and 100 µm and the following chemical composition (in weight-%): 7.7-8.3 Cr; 5.0-5.25 Co; 2.0-2.1 Mo;7.8-8.3 W; 5.8-6.1 Ta; 4.7-5.1 Al; 1.1-1.4 Ti; 0.13-0.15 C; 0.005-0.008 B, the remainder being Ni and unavoidable impurities.

Of course, the invention is not limited to the decribed embodiments. For example, it the disclosed nickel-base superalloy powder is applicable not only for SLM manufacturing process but also for EMB manufacturing process with the described advantages.

## Claims

1. Nickel-base superalloy powder for selective laser melting or electron beam melting additive manufacturing of three-dimensional articles, wherein said superalloy powder has a chemical composition that allows establishing a gamma-prime precipitation content of 60-70 vol.-% in the superalloy in a heat treated condition, **characterized in that** said powder has a powder size distribution between 10 and 100 µm and a spherical morphology and that the ratios of the content (in weight- %) of the alloying elements C, B, Hf, Zr, Si are the following:
C/B = 10 - 32;
C/Hf > 2;
C/Zr > 8;
C/Si > 1.
wherein the nickel-base superalloy powder is consisting of the following chemical composition (in weight-%):
7.7-8.3 Cr
5.0-5.25 Co
2.0-2.1 Mo
7.8-8.3 W
5.8-6.1 Ta
4.7-5.1 Al
1.1-1.4 Ti
0.08-0.16 C
0.005-0.008 B
0-0.04 Hf
0-0.01 Zr
0-0.08 Si
remainder Ni and unavoidable impurities.

2. Nickel-base superalloy powder according to claim 1, **characterized in** 4.9-5.1 wt.-% Al.

3. Nickel-base superalloy powder according to claim 1, **characterized in** 1.3-1.4 wt.-% Ti.

4. Nickel-base superalloy powder according to claim 1, **characterized in** 0.09-0.16 wt.-% C.

5. Nickel-base superalloy powder according to claim 4, **characterized in** 0.13-0.15 wt.-% C.

6. Nickel-base superalloy powder according to claim 1, **characterized in** 0-0.03 wt.-% Si, preferable 0.005-0.03 wt.-% Si.

7. Nickel-base superalloy powder according to claim 1, **characterized in** 0-0.01 wt.-% Hf, preferable 0.005-0.01 wt.-% Hf .

8. Nickel-base superalloy powder according to claim 1, characterzied in 0.005-0.01 wt.-% Zr.

9. Nickel-base superalloy powder according to claim 5, **characterized in that** it is free of Hf, Zr and Si.

## Patentansprüche

1. Nickelbasis-Superlegierungspulver für ein selektives Laserschmelzen oder Elektronenstrahlschmelzen zur additiven Herstellung dreidimensionaler Bauteile, wobei das Superlegierungspulver eine chemische Zusammensetzung aufweist, die es ermöglicht, in einem wärmebehandelten Zustand einen Gamma-Prime-Ausscheidungsgehalt von 60-70 Vol.-% in der Superlegierung nachzuweisen, **dadurch gekennzeichnet, dass** das Pulver eine Pulvergrößenverteilung zwischen 10 und 100 µ und eine sphärische Morphologie aufweist und dass die Verhältnisse des Gehalts (in Gewichts-%) der Legierungselemente C, B, Hf, Zr, Si folgende sind:
C/B = 10 - 32;
C/Hf > 2;
C/Zr > 8;
C/Si > 1;
wobei das Nickelbasis-Superlegierungspulver folgende chemische Zusammensetzung aufweist (in Gewichts-%):
7,7-8,3 Cr
5,0-5,25 Co
2,0-2,1 Mo
7,8-8,3 W
5,8-6,1 Ta
4,7-5,1 Al
1,1-1,4 Ti
0,08-0,16 C
0,005-0,008 B
0-0,04 Hf
0-0,01 Zr
0-0,08 Si
der Rest sind Ni und unvermeidbare Verunreinigungen.

2. Nickelbasis-Superlegierungspulver nach Anspruch 1, **gekennzeichnet durch** 4,9-5,1 Gew.-% Al.

3. Nickelbasis-Superlegierungspulver nach Anspruch 1, **gekennzeichnet durch** 1,3-1,4 Gew.-% Ti.

4. Nickelbasis-Superlegierungspulver nach Anspruch 1, **gekennzeichnet durch** 0,09-0,16 Gew.-% C.

5. Nickelbasis-Superlegierungspulver nach Anspruch 4, **gekennzeichnet durch** 0,13-0,15 Gew.-% C.

6. Nickelbasis-Superlegierungspulver nach Anspruch 1, **gekennzeichnet durch** 0-0,03 Gew.-% Si, bevorzugt 0,005-0,03 Gew.-% Si.

7. Nickelbasis-Superlegierungspulver nach Anspruch 1, **gekennzeichnet durch** 0-0,01 Gew.-% Hf, bevorzugt 0,005-0,01 Gew.-% Hf.

8. Nickelbasis-Superlegierungspulver nach Anspruch 1, **gekennzeichnet durch** 0,005-0,01 Gew.-% Zr.

9. Nickelbasis-Superlegierungspulver nach Anspruch 5, **dadurch gekennzeichnet, dass** das Pulver frei von Hf, Zr und Si ist.

## Revendications

1. Poudre de superalliage à base de nickel pour la fabrication d'articles tridimensionnels au moyen d'un additif de fusion par un faisceau d'électrons ou de fusion sélective au laser, laquelle poudre de superalliage a une composition chimique qui permet l'établissement d'une teneur en précipitation de gamma-prime de 60 à 70 % en volume dans le superalliage dans un état traité à la chaleur, **caractérisée en ce que** la poudre a une distribution de taille de poudre comprise entre 10 et 100 µm et une morphologie sphérique et **en ce que** les proportions des contenus (en % en poids) des éléments d'alliage C, B, Hf, Zr, Si sont les suivantes :
C/B = 10 à 32 ;
C/Hf > 2 ;
C/Zr > 8 ;
C/Si > 1 ;
laquelle poudre de superalliage à base de nickel consiste en la composition chimique suivante (en % en poids) :
7,7-8,3 Cr
5,0-5,25 Co
2,0-2,1 Mo
7,8-8,3 W
5,8-6,1 Ta
4,7-5,1 Al
1.1-1,4 Ti
0,08-0,16 C
0,005-0,008 B
0-0,04 Hf
0-0,01 Zr
0-0,08 Si
le reste étant du Ni et des impuretés inévitables.

2. Poudre de superalliage à base de nickel selon la revendication 1, **caractérisée par** 4,9 à 5,1 % en poids d'Al.

3. Poudre de superalliage à base de nickel selon la revendication 1, **caractérisée par** 1,3 à 1,4 % en poids de Ti.

4. Poudre de superalliage à base de nickel selon la revendication 1, **caractérisée par** 0,09 à 0,16% en poids de C.

5. Poudre de superalliage à base de nickel selon la revendication 4, **caractérisée par** 0,13 à 0,15 % en poids de C.

6. Poudre de superalliage à base de nickel selon la revendication 1, **caractérisée par** 0 à 0,03 % en poids de Si, de préférence 0,005 à 0,03 % en poids de Si.

7. Poudre de superalliage à base de nickel selon la revendication 1, **caractérisée par** 0 à 0,01 % en poids de Hf, de préférence 0,005 à 0,01 % en poids de Hf.

8. Poudre de superalliage à base de nickel selon la revendication 1, **caractérisée par** 0,005 à 0,01 % en poids de Zr.

9. Poudre de superalliage à base de nickel selon la revendication 5, **caractérisée en ce qu'**elle est exempte de Hf, Zr et Si.
